# FASCICULE DE BREVET EUROPEEN

(11) **EP 3 729 627 B1**
(45) Date de publication et mention de la délivrance du brevet: **02.02.2022**
(21) Numéro de dépôt: 18815747.3
(22) Date de dépôt: 17.12.2018
(51) Int. Cl.: H02M 3/335

(54) **CONVERTISSEUR DC-DC POUR CHARGEUR BIDIRECTIONNEL**
GLEICHSPANNUNGSWANDLER FÜR EIN BIDIREKTIONALES LADEGERÄT
DC-DC CONVERTER FOR A BIDIRECTIONAL CHARGER

(30) Priorité: 21.12.2017 FR 1762827
(43) Date de publication de la demande: 28.10.2020
(73) Titulaire: Renault S.A.S., 92100 Boulogne-Billancourt (FR); Nissan Motor Co., Ltd., Yokohama-shi, Kanagawa 221-0023 (JP)
(72) Inventeur: GASCHER, Alain, 92310 Sevres (FR)
(74) Mandataire: Rougemont, Bernard
(86) Numéro de dépôt international: PCT/EP2018/085144
(87) Numéro de publication internationale: WO 2019/121477

(56) Documents cités:
- WO-A1-2015/147828
- WO-A1-2017/134232
- FR-A1- 3 001 843
- US-A1- 2014 347 893

## Description

La présente invention se rapporte à un convertisseur continu-continu pour un chargeur de batterie d'accumulateurs électriques bidirectionnel.

Un chargeur de batterie d'accumulateurs électriques classique est unidirectionnel en ce sens qu'il permet uniquement de recharger les accumulateurs électriques depuis un réseau externe d'alimentation électrique, ce qu'on appelle communément le sens de charge ou encore sens direct.

Un tel chargeur de batterie d'accumulateurs électrique unidirectionnel comprend généralement un étage de correction du facteur de puissance, aussi connu sous son abréviation anglophone PFC, et un étage de conversion continu-continu, aussi connu sous le nom de hacheur en français et plus généralement appelé étage DC-DC.

Cependant, il est aujourd'hui utile que les chargeurs d'accumulateurs puissent aussi délivrer l'électricité accumulée à un réseau électrique externe ; on parle alors de chargeurs bidirectionnels. La fourniture de courant par la batterie d'accumulateurs électriques au réseau externe étant dit sens de décharge, ou encore sens indirect.

Une problématique connue est l'adaptation des chargeurs d'accumulateurs unidirectionnels connus de l'art antérieur en chargeurs bidirectionnels.

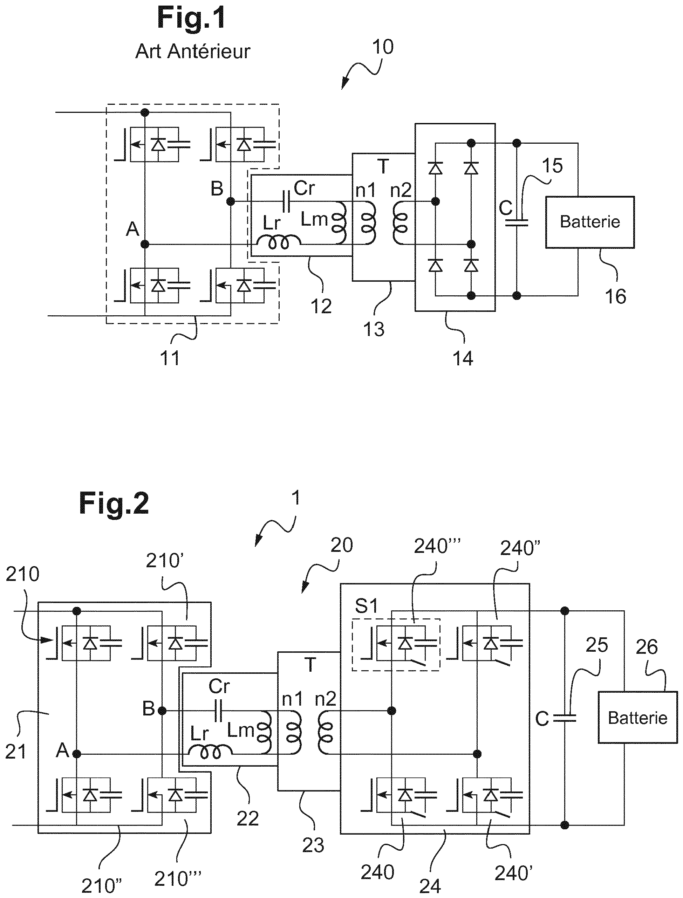

En particulier, un chargeur unidirectionnel connu de l'art antérieur pour des applications à forte densité de puissance met en œuvre un convertisseur DC-DC du type LLC résonant à pont complet, tel que représenté en figure 1 de l'art antérieur.

Un tel convertisseur 10 permet d'obtenir un bon rendement, une trace CEM faible et un faible encombrement. Il permet en outre de mettre en œuvre des commutations dites « douces », réduisant les pertes de commutation qui se produisent généralement lors d'un fonctionnement par modulation de largeur d'impulsion classique.

Un convertisseur LLC résonant à pont complet 10 selon la figure 1, comprend un pont complet de commutation 11 générant un signal ou courant carré excitant un circuit LLC 12, composé d'un condensateur et de deux inductances. Le circuit LLC 12 produit alors un courant sinusoïdal résonant dans un transformateur 13 qui est redressé par le pont redresseur 14. Le signal/courant redressé est alors filtré par le condensateur de sortie 15 avant d'être collecté par la batterie 16.

L'ensemble formé par le pont complet de commutation 11 et le circuit LLC 12 étant dit circuit primaire ou partie primaire du convertisseur, et l'ensemble formé du pont redresseur 14 et du condensateur de sortie 15 étant dit circuit secondaire, ou partie secondaire du convertisseur. En d'autre terme, dans un fonctionnement unidirectionnel d'un chargeur, le courant est envoyé depuis le primaire vers le secondaire, on parle de sens direct de fonctionnement du convertisseur.

On obtient une commutation douce du type zéro de la tension (ZVS) au primaire et au zéro du courant (ZCS) au secondaire. Ceci constitue une solution permettant de revenir à une fréquence de commutation plus grande.

Cependant, pour obtenir un chargeur bidirectionnel il existe le besoin d'un convertisseur DC-DC robuste, peu coûteux et présentant un rendement relativement bon.

De l'art antérieur pertinent pour la présente invention est le document WO 2015/147828 A1. Ce docuement divulgue un convertisseur DC-DC bidirectionnel basculant entre deux topologies sur le secondaire en fonction du sens du flux d'energie.

On propose un dispositif de conversion continu-continu pour un chargeur de batterie d'accumulateurs électriques, configuré pour être connecté à un réseau électrique externe, apte à fonctionner de manière bidirectionnelle, en recharge de la batterie dans un sens direct et en décharge de la batterie vers le réseau électrique dans un sens indirect, comprenant au moins un convertisseur LLC résonant à pont complet, chaque convertisseur LLC résonant à pont complet comprenant :
- un pont complet de commutation générant un signal carré, ledit pont complet de commutation comprenant un montage en pont complet de quatre structures , formées chacune d'un transistor, d'une diode et d'un condensateur montés en parallèle;
- un circuit LLC, comprenant un condensateur et deux inductances, excité par ledit signal carré ;
- un transformateur transmettant ledit signal issu du circuit LLC ;
- un redresseur redressant le signal transmis par le transformateur, ledit redresseur étant formé d'un pont complet de quatre structures, formées chacune d'un transistor, d'une diode et d'un condensateur montés en parallèle;
- un condensateur de sortie filtrant le signal redressé ;

Chaque structure du redresseur comprend en outre un dispositif d'annulation de l'effet du condensateur de la structure associée annulant l'effet dudit condensateur lorsque le dispositif de conversion continu-continu fonctionne en mode direct. Ainsi, on peut obtenir un convertisseur DC-DC réversible, permettant au chargeur de fonctionner de manière bidirectionnelle tout en permettant d'obtenir un rendement élevé, avec une relativement bonne fiabilité.

Avantageusement et de manière non limitative, ledit dispositif d'annulation comprend :
- un autre transistor en série avec le condensateur de la structure associée, entre le condensateur de la structure associée et l'anode de la diode de la structure ;
- un montage RC comprenant en parallèle une résistance et un autre condensateur, ledit montage RC étant monté entre la grille de l'autre transistor et l'anode de la diode de la structure associée ; et
- une diode connectée par sa cathode à la grille de l'autre transistor et par son anode à la grille du transistor de la structure associée. Ainsi, le dispositif d'annulation peut être obtenu pour un coût relativement faible.

Avantageusement et de manière non limitative, le dispositif de conversion comprend deux convertisseurs LLC résonants à pont complet en parallèle. Ainsi, on peut améliorer le rendement et la fiabilité du dispositif.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue d'un convertisseur DC-DC connu de l'art antérieur;
- la figure 2 est un dispositif de conversion continu-continu selon un premier mode de réalisation de l'invention ;
- la figure 3 est un dispositif de conversion continu-continu selon un deuxième mode de réalisation de l'invention ; et
- la figure 4 est une vue de détail d'une structure d'un redresseur d'un convertisseur selon le premier ou deuxième mode de réalisation de l'invention.

En référence à la figure 2, dans un premier mode de réalisation de l'invention, un chargeur non représenté dans son ensemble, comprend un étage redresseur correcteur du facteur de puissance dit PFC, et un dispositif de conversion continu-continu 1 comprenant un convertisseur LLC résonant à pont complet 20 bidirectionnel.

Le convertisseur LLC résonant à pont complet 20 comprend un pont complet de commutation 21 générant un signal ou courant carré excitant un circuit LLC 22, composé d'un condensateur et de deux inductances. Le circuit LLC 22 produit alors un courant sinusoïdal résonant transmis par un transformateur 23 et redressé par un pont redresseur 24. Le signal/courant redressé et amplifié est alors filtré par le condensateur de sortie 25 avant d'être collecté par la batterie 26.

L'ensemble formé par le pont complet de commutation 21 et le circuit LLC 22 est dit circuit primaire ou partie primaire du convertisseur, et l'ensemble formé du redresseur 24 et du condensateur de sortie 25 est dit circuit secondaire, ou partie secondaire du convertisseur.

Dans le fonctionnement bidirectionnel du chargeur, lorsque le courant est envoyé depuis le primaire vers le secondaire du convertisseur 20, on parle de sens direct de fonctionnement du convertisseur 20, ce qui permet de recharger la batterie 26 depuis un réseau électrique externe connecté au primaire. Le chargeur est en outre conformé pour fonctionner en sens indirect, dans lequel l'énergie accumulée par la batterie 26 transite du secondaire vers le primaire du convertisseur 20 afin d'alimenter le réseau électrique externe.

Le pont de commutation 21 comprend 4 bras de commutation, chacun étant formé d'une structure 210, 210′, 210ʺ, 210‴, la structure comprend des composants électroniques montés en parallèles les uns des autres.

Chaque structure 210, 210′, 210ʺ, 210‴ comprenant une diode, un transistor et un condensateur.

Les structures 210, 210′, 210ʺ, 210‴ sont montées en pont complet, selon une configuration bien connue de l'homme du métier.

Le circuit LLC 22 et le transformateur 23 sont conformes à ceux de l'art antérieur cité précédemment.

Le redresseur 24, du circuit secondaire, comprend un pont complet formé de 4 bras de commutation.

Chaque bras de commutation étant formé d'une structure 240, 240′, 240ʺ, 240‴, la structure comprend des composants électroniques montés en parallèles les uns des autres.

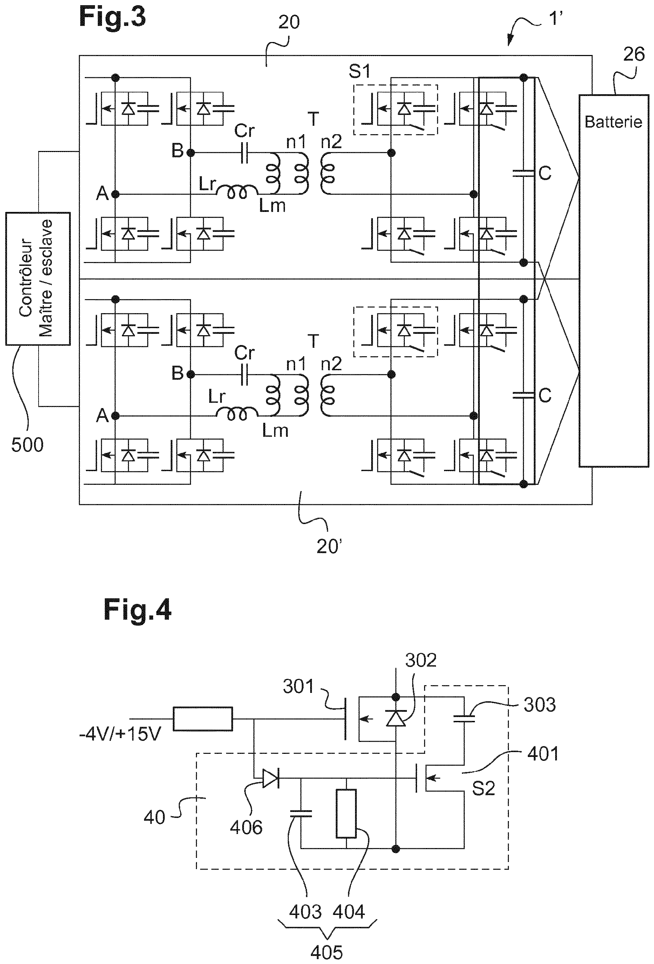

Chaque structure 240, 240′, 240ʺ, 240‴ comprenant, en référence à la figure 4, une diode 302, un transistor 301 et un condensateur 303, selon un montage en pont complet de redresseur.

Le condensateur 303 au circuit secondaire permet de ralentir la montée en tension et permet une coupure du courant sans perte et avec une faible surtension.

En effet, la structure du convertisseur 20 n'étant pas symétrique, le courant haché au secondaire est plus élevé qu'au primaire lorsque le convertisseur fonctionne dans le sens indirect (sens de décharge).

Or, ce condensateur 303 au secondaire a pour effet d'affecter négativement le rendement du convertisseur DC-DC 20 lors de son fonctionnement en sens direct.

Afin de corriger cet inconvénient, chaque structure 240, 240′, 240ʺ, 240‴ du redresseur 24 comprend en outre un montage de coupure 40, permettant de couper l'effet du condensateur (encore appelé snubber) 303 de chaque structure 240, 240′, 240ʺ, 240‴ du redresseur 24 au secondaire lors du fonctionnement du convertisseur 20 en sens direct.

Ce montage de coupure 40, associé à une structure 240, 240′, 240ʺ, 240‴, en référence à la figure 4, comprend un transistor 401, auquel on se réfère comme étant l'autre transistor 401 ou le transistor de coupure 401, par opposition au transistor 301 de la structure associée 240, 240′, 240ʺ, 240‴, monté en série avec le condensateur de la structure 240, 240′, 240ʺ, 240‴, entre le condensateur de la structure 240, 240′, 240ʺ, 240‴ associée et l'anode de la diode de la structure 240, 240′, 240ʺ, 240‴.

Le montage de coupure 40 comprend aussi un montage RC 405 comprenant en parallèle une résistance 404 et un autre condensateur 403, ledit montage RC 405 étant monté entre la grille de l'autre transistor 401 et l'anode de la diode 302 de la structure associée240, 240′, 240ʺ, 240‴.

Le montage de coupure 40 comprend aussi une diode 406 connectée par sa cathode à la grille de l'autre transistor 401 et par son anode à la grille du transistor 301 de la structure associée 240, 240′, 240ʺ, 240‴.

Le transistor 401 utilisé pour couper le courant est de très petit calibre par rapport au transistor 301 de la structure. Par exemple le transistor de coupure 401 présente une impédance de 10 ohms alors que le transistor 301 de la structure est de 10 000 ohms, soit mille fois plus gros.

La commande de coupure et d'enclenchement du montage de coupure 40 est ainsi autogénérée.

L'avantage est d'augmenter le rendement du convertisseur bidirectionnel et de diminuer les surtensions pour un coût relativement faible.

Selon un deuxième mode de réalisation de l'invention, en référence à la figure 3, le chargeur bidirectionnel comprend un étage de conversion continu-continu 1', comprenant deux convertisseurs DC-DC 20, 20', tel que décrit dans le premier mode de réalisation, montés en parallèles, et contrôlés par une carte micro-électronique 500

Une telle structure de mise en parallèle des convertisseurs DC-DC 20, 20' permet de supporter des courant élevés, avec une robustesse relativement importante.

L'invention n'est pas limitée à seulement deux convertisseurs DC-DC montés en parallèles, mais peut comprendre un plus grand nombre de convertisseurs montés en parallèles.

## Revendications

1. Dispositif de conversion continu-continu (1, 1') pour un chargeur de batterie (26) d'accumulateurs électriques, configuré pour être connecté à un réseau électrique externe, apte à fonctionner de manière bidirectionnelle, en recharge de la batterie (26) dans un sens direct et en décharge de la batterie (26) vers le réseau électrique dans un sens indirect, comprenant au moins un convertisseur LLC résonant à pont complet (20),
chaque convertisseur LLC résonant à pont complet (20) comprenant :
- un pont complet de commutation (21) générant un signal carré, ledit pont complet de commutation (21) comprenant un montage en pont complet de quatre structures (210, 210′, 210ʺ, 210‴), formées chacune d'un transistor (301, 401), d'une diode et d'un condensateur montés en parallèle;
- un circuit LLC (22), comprenant un condensateur et deux inductances, excité par ledit signal carré ;
- un transformateur (23) transmettant ledit signal issu du circuit LLC (22);
- un redresseur (24) redressant le signal transmis par le transformateur (23), ledit redresseur (24) étant formé d'un pont complet de quatre structures (240, 240′, 240ʺ, 240‴), formées chacune d'un transistor (301), d'une diode (302) et d'un condensateur (303) montés en parallèle;
- un condensateur de sortie (25) filtrant le signal redressé ;
**caractérisé en ce que** chaque structure (240, 240′, 240ʺ, 240‴) du redresseur (24) comprend en outre un dispositif d'annulation (40) de l'effet du condensateur (303) de la structure (240, 240′, 240ʺ, 240‴) associée, annulant l'effet dudit condensateur (303) lorsque le dispositif de conversion continu-continu (1) fonctionne en mode direct.

2. Dispositif de conversion continu-continu (1, 1') selon la revendication 1, **caractérisé en ce que** ledit dispositif d'annulation (40) comprend :
- un autre transistor (401) en série avec le condensateur (303) de la structure (240, 240′, 240ʺ, 240‴) associée, entre le condensateur (303) de la structure associée (240, 240′, 240ʺ, 240‴) et l'anode de la diode (302) de la structure associée (240, 240′, 240ʺ, 240‴);
- un montage RC (405) comprenant en parallèle une résistance (404) et un autre condensateur (403), ledit montage RC (405) étant monté entre la grille de l'autre transistor (401) et l'anode de la diode (302) de la structure associée (240, 240′, 240ʺ, 240‴); et
- une diode (406) connectée par sa cathode à la grille de l'autre transistor (401) et par son anode à la grille du transistor (301) de la structure associée (240, 240′, 240ʺ, 240‴).

3. Dispositif de conversion continu-continu (1′) selon la revendication 1 ou 2, **caractérisé en ce qu'**il comprend deux convertisseurs LLC résonants à pont complet (20, 20′) en parallèle.

## Patentansprüche

1. Gleichstrom/Gleichstrom-Wandlervorrichtung (1, 1') für ein Batterieladegerät (26) elektrischer Akkumulatoren, das konfiguriert ist, mit einem externen Stromnetz verbunden zu werden, das bidirektional arbeiten kann, in Aufladung der Batterie (26) in einer direkten Richtung und in Entladung der Batterie (26) zum Stromnetz in einer indirekten Richtung, die mindestens einen LLC-Resonanzwandler mit Vollbrücke (20) enthält,
wobei jeder LLC-Resonanzwandler mit Vollbrücke (20) enthält:
- eine Schaltvollbrücke (21), die ein Rechtecksignal erzeugt, wobei die Schaltvollbrücke (21) eine Vollbrückenschaltung von vier Strukturen (210, 210′, 210ʺ, 210‴) enthält, die je von einem Transistor (301, 401), einer Diode und einem Kondensator gebildet werden, die parallelgeschaltet sind;
- einen LLC-Schaltkreis (22), der einen Kondensator und zwei Drosselspulen enthält, der vom Rechtecksignal angeregt wird;
- einen Transformator (23), der das vom LLC-Schaltkreis (22) stammende Signal überträgt;
- einen Gleichrichter (24), der das vom Transformator (23) übertragene Signal gleichrichtet, wobei der Gleichrichter (24) von einer Vollbrücke aus vier Strukturen (240, 240′, 240ʺ, 240‴) gebildet wird, die je von einem Transistor (301), einer Diode (302) und einem Kondensator (303) gebildet werden, die parallelgeschaltet sind;
- einen Ausgangskondensator (25), der das gleichgerichtete Signal filtert;
**dadurch gekennzeichnet, dass** jede Struktur (240, 240′, 240ʺ, 240‴) des Gleichrichters (24) außerdem eine Unterdrückungsvorrichtung (40) der Wirkung des Kondensators (303) der zugeordneten Struktur (240, 240′, 240ʺ, 240‴) enthält, die die Wirkung des Kondensators (303) unterdrückt, wenn die Gleichstrom/Gleichstrom-Wandlervorrichtung (1) im direkten Modus arbeitet.

2. Gleichstrom/Gleichstrom-Wandlervorrichtung (1, 1') nach Anspruch 1, **dadurch gekennzeichnet, dass** die Unterdrückungsvorrichtung (40) enthält:
- einen weiteren Transistor (401) in Reihe mit dem Kondensator (303) der zugeordneten Struktur (240, 240′, 240ʺ, 240‴) zwischen dem Kondensator (303) der zugeordneten Struktur (240, 240′, 240ʺ, 240‴) und der Anode der Diode (302) der zugeordneten Struktur (240, 240′, 240ʺ, 240‴);
- eine RC-Schaltung (405), die parallelgeschaltet einen Widerstand (404) und einen weiteren Kondensator (403) enthält, wobei die RC-Schaltung (405) zwischen dem Gate des weiteren Transistors (401) und der Anode der Diode (302) der zugeordneten Struktur (240, 240′, 240ʺ, 240‴) eingebaut ist; und
- eine Diode (406), die durch ihre Kathode mit dem Gate des anderen Transistors (401) und durch ihre Anode mit dem Gate des Transistors (301) der zugeordneten Struktur (240, 240′, 240ʺ, 240‴) verbunden ist.

3. Gleichstrom/Gleichstrom-Wandlervorrichtung (1, 1′) nach Anspruch 1 oder 2, **dadurch gekennzeichnet, dass** sie zwei parallelgeschaltete LLC-Resonanzwandler mit Vollbrücke (20, 20') enthält.

## Claims

1. DC-to-DC conversion device (1, 1') for a charger for charging a battery (26) of electrical accumulators that is configured to be connected to an external electricity grid, able to operate bidirectionally, by recharging the battery (26) in a forward direction and by discharging the battery (26) to the electricity grid in a reverse direction, comprising at least one full-bridge LLC resonant converter (20),
each full-bridge LLC resonant converter (20) comprising:
- a full switching bridge (21) generating a square-wave signal, said full switching bridge (21) comprising a full-bridge assembly having four structures (210, 210′, 210ʺ, 210‴), each formed by a transistor (301, 401), by a diode and by a capacitor that are connected in parallel;
- an LLC circuit (22), comprising a capacitor and two inductors and excited by said square-wave signal;
- a transformer (23) transmitting said signal from the LLC circuit (22);
- a rectifier (24) rectifying the signal transmitted by the transformer (23), said rectifier (24) being formed by a full bridge having four structures (240, 240′, 240ʺ, 240‴), each formed by a transistor (301), by a diode (302) and by a capacitor (303) that are connected in parallel;
- an output capacitor (25) filtering the rectified signal;
**characterized in that** each structure (240, 240′, 240ʺ, 240‴) of the rectifier (24) furthermore comprises a device (40) for eliminating the effect of the capacitor (303) of the associated structure (240, 240′, 240ʺ, 240‴), eliminating the effect of said capacitor (303) when the DC-to-DC conversion device (1) operates in forward mode.

2. DC-to-DC conversion device (1, 1′) according to Claim 1, **characterized in that** said eliminating device (40) comprises:
- another transistor (401) in series with the capacitor (303) of the associated structure (240, 240′, 240ʺ, 240‴), between the capacitor (303) of the associated structure (240, 240′, 240ʺ, 240‴) and the anode of the diode (302) of the associated structure (240, 240′, 240ʺ, 240‴);
- an RC assembly (405) comprising a resistor (404) and another capacitor (403) in parallel, said RC assembly (405) being connected between the gate of the other transistor (401) and the anode of the diode (302) of the associated structure (240, 240′, 240ʺ, 240‴); and
- a diode (406) connected, by its cathode, to the gate of the other transistor (401) and, by its anode, to the gate of the transistor (301) of the associated structure (240, 240′, 240ʺ, 240‴).

3. DC-to-DC conversion device (1′) according to Claim 1 or 2, **characterized in that** it comprises two full-bridge LLC resonant converters (20, 20′) in parallel.
